(19) Europäisches Patentamt
European Patent Office
Office européen des brevets

(11) **EP 4 703 599 A1**

(12) **EUROPEAN PATENT APPLICATION**
published in accordance with Art. 153(4) EPC

(43) Date of publication:
**04.03.2026 Bulletin 2026/10**

(21) Application number: **24796469.5**

(22) Date of filing: **17.01.2024**

(51) International Patent Classification (IPC):
*F16C 33/78* (2006.01)    *F16C 19/06* (2006.01)
*F16C 19/16* (2006.01)    *F16C 33/58* (2006.01)
*F16J 15/3204* (2016.01)    *F16J 15/3232* (2016.01)

(52) Cooperative Patent Classification (CPC):
**F16C 19/06; F16C 19/16; F16C 33/58; F16C 33/78; F16J 15/3204; F16J 15/3232**

(86) International application number:
**PCT/JP2024/001113**

(87) International publication number:
**WO 2024/224710 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 JP 2023074809**
**29.09.2023 JP 2023170321**

(71) Applicant: **NSK LTD.**
**Tokyo 141-8560 (JP)**

(72) Inventor: **YAMAGATA Shin**
**Fujisawa-shi, Kanagawa 251-8501 (JP)**

(74) Representative: **Grünecker Patent- und Rechtsanwälte**
**PartG mbB**
**Leopoldstraße 4**
**80802 München (DE)**

(54) **BALL BEARING WITH SEAL**

(57)    In this ball bearing with a seal, an inner ring has a seal inner ring groove provided with a bottom surface and an outer side surface intersecting the bottom surface. The seal member comprises a core metal and a seal part. The seal part has an outer part adhering to the core metal and a plate-shaped lip part extending radially inward from the outer part. The lip part has an outer surface and an end surface intersecting the outer surface, and the outer surface including an intersection part with the end surface abuts on the outer side surface.

FIG. 1

## Description

TECHNICAL FIELD

The present invention relates to a seal-equipped ball bearing.

BACKGROUND ART

For motors of household appliances such as air conditioner fans, cooling fans, ventilation fans, cleaners, and washing machines, industrial motors such as general-purpose motors, servomotors, and stepping motors, and machine tool spindles and encoders, rotation shafts thereof are generally rotatably supported by a seal-equipped ball bearing including a seal member.

Particularly, in a bearing for a servomotor, an encoder and a brake may be contaminated and break down due to leakage of grease and a substance derived from the grease from the seal member. To avoid such a breakdown, maintenance in a relatively short cycle is required, which leads to an increase in running costs.

Patent Literature 1 discloses a rolling bearing including a contact seal. In the rolling bearing, an outer groove wall surface of a seal groove is formed as an inclined surface that is inclined to an outer diameter side toward an axially outer side, and a tip end portion of a lip of a seal member is formed in an R shape that abuts against the outer groove wall surface of the seal groove in a normal line direction.

CITATION LIST

PATENT LITERATURE

Patent Literature 1: JP2022-72083A

SUMMARY OF INVENTION

TECHNICAL PROBLEM

However, a contact surface pressure distribution is not appropriate in the lip of the seal member disclosed in Patent Literature 1, and thus it is considered that a sealing effect is not sufficient.

The present invention is made in view of such a problem, and an object of the present invention is to provide a seal-equipped ball bearing that can exhibit an excellent sealing property by ensuring an appropriate contact surface pressure distribution of a lip portion.

SOLUTION TO PROBLEM

A seal-equipped ball bearing of the present invention includes:

an outer ring having an outer ring raceway groove in an inner diameter surface;

an inner ring having an inner ring raceway groove in an outer diameter surface;

a plurality of balls rollably arranged between the inner ring raceway groove and the outer ring raceway groove; and

a seal member attached to the outer ring and extending toward the inner ring on each of two sides of the balls in an axial direction, in which

the inner ring has a sealing inner ring groove having a bottom surface and an outer side surface intersecting the bottom surface,

the seal member includes a core metal and a seal portion,

the seal portion has an outer portion in close contact with the core metal and a plate-shaped lip portion extending radially inward from the outer portion,

the lip portion has an outer surface and an end surface intersecting the outer surface, and

the outer surface including an intersecting portion with the end surface abuts against the outer side surface.

ADVANTAGEOUS EFFECTS OF INVENTION

According to the present invention, it is possible to provide a seal-equipped ball bearing that can exhibit an excellent sealing property by ensuring an appropriate contact surface pressure distribution of a lip portion.

BRIEF DESCRIPTION OF DRAWINGS

FIG. 1 is a cross-sectional view of a seal-equipped ball bearing according to an embodiment.
FIG. 2 is an enlarged view showing a vicinity of a lip portion in the seal-equipped ball bearing according to the present embodiment.
In FIG. 3, dimension lines and reference numerals indicating dimensions of respective portions are added to a cross section of the lip portion.
FIG. 4 is a cross-sectional view of the seal-equipped ball bearing according to a comparative example.
FIG. 5 is an enlarged view showing a vicinity of a lip portion in the seal-equipped ball bearing according to the comparative example.
FIG. 6 shows a surface pressure distribution of a seal portion of the seal-equipped ball bearing according to the present embodiment.
FIG. 7 shows a surface pressure distribution of a seal portion of the seal-equipped ball bearing according to the comparative example.
FIG. 8 is a cross-sectional view of a test machine reproducing an inside of a servomotor.
FIG. 9 shows test results regarding a disk contamination degree of the embodiment and the comparative example.
FIG. 10 shows test results regarding a grease leakage rate of the embodiment and the comparative example.

DESCRIPTION OF EMBODIMENTS

Hereinafter, an embodiment of a seal-equipped ball bearing of the present invention will be described with reference to the drawings.

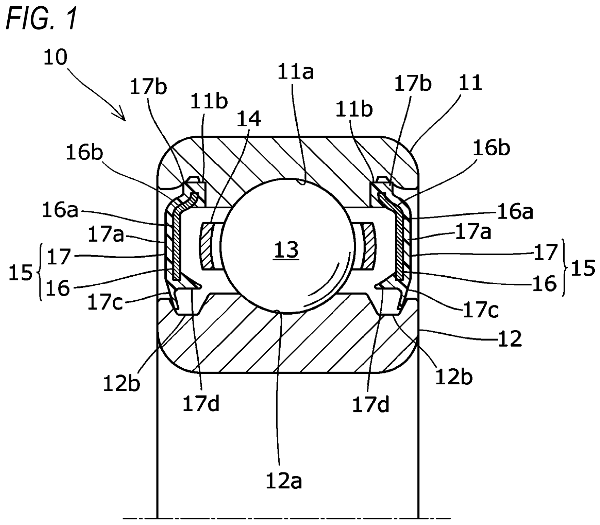

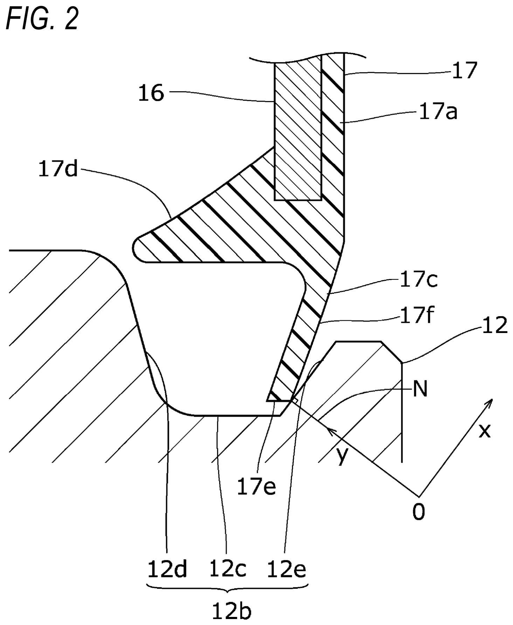

FIG. 1 is a cross-sectional view of a seal-equipped ball bearing 10 according to the present embodiment. FIG. 2 is an enlarged view showing a vicinity of a lip portion in the seal-equipped ball bearing 10 according to the present embodiment. Here, an "axial direction" refers to an axis direction of the seal-equipped ball bearing 10, an "axially inward" refers to a direction toward a ball 13 from a seal member 15, and an "axially outward" refers to a direction toward the seal member 15 from the ball 13. In the ball bearing according to the present embodiment, an outer ring is attached to a fixing member such as a housing, an inner ring is attached to a rotation shaft, and the ball bearing is used by inner ring rotation.

The seal-equipped ball bearing 10, which is a deep groove ball bearing, includes an outer ring 11 having an outer ring raceway groove 11a on an inner diameter surface, an inner ring 12 having an inner ring raceway groove 12a on an outer diameter surface, a plurality of the balls 13 rollably arranged between the outer ring raceway groove 11a and the inner ring raceway groove 12a, a cage 14 formed of resin and holding the balls 13 at prescribed intervals in a circumferential direction, and a pair of the seal members 15 fixed to corresponding two sides of the inner diameter surface of the outer ring 11 in the axial direction and sealing an inside of the bearing. Grease is sealed in the bearing in advance.

In the present embodiment, the outer ring raceway groove 11a and the inner ring raceway groove 12a are formed in the outer ring 11 and the inner ring 12 such that axially intermediate positions of the balls 13 are axially intermediate positions of the seal-equipped ball bearing 10.

The outer ring 11 has a sealing outer ring groove 11b on each of two sides of the outer ring raceway groove 11a, and the inner ring 12 has a sealing inner ring groove 12b on each of two sides of the inner ring raceway groove 12a.

The seal member 15 includes a core metal 16 formed in a substantially annular shape by a metal plate such as a steel plate, and a seal portion 17 fixed to the core metal 16 and formed of an elastic material such as rubber. The core metal 16 includes a body portion 16a disposed along a plane orthogonal to an axis of the seal-equipped ball bearing 10, and a bent portion 16b continuous with a radially outer end of the body portion 16a and bent axially inward.

The seal portion 17 includes an outer portion 17a that is in close contact with and covers an axially outer surface (surface on a side opposite from the ball 13) of the body portion 16a of the core metal 16, an outer edge portion 17b that is continuous with the outer portion 17a and wraps an outer peripheral edge of the bent portion 16b of the core metal 16, a lip portion 17c that is continuous with the outer portion 17a and extends radially inward from an inner peripheral edge of the core metal 16, and an auxiliary lip portion 17d that is continuous with a vicinity of a base of the lip portion 17c and has a substantially triangular cross-sectional shape extending axially inward to wrap the inner peripheral edge of the core metal 16. As shown in FIG. 2, the lip portion 17c has an end surface 17e intersecting an inner surface (surface on a side close to the ball 13) and an outer surface 17f thereof. The end surface 17e is preferably a cylindrical surface or a conical surface. Further, an intersecting portion of the outer surface 17f and the end surface 17e preferably has an edge shape. In the cross section of FIG. 2, the outer surface 17f and the end surface 17e preferably intersect at an obtuse angle.

The outer portion 17a is disposed along the plane orthogonal to the axis of the seal-equipped ball bearing 10 together with the body portion 16a. On the other hand, the lip portion 17c is inclined axially inward relative to the plane orthogonal to the axis of the seal-equipped ball bearing 10 (the outer surface 17f of the lip portion 17c has a tapered shape whose diameter decreases axially inward from an outer surface of the outer portion 17a), and extends in a cantilever shape in the cross section of FIG. 2. The auxiliary lip portion 17d has an inner peripheral surface as a cylindrical surface substantially parallel to the axis of the seal-equipped ball bearing 10.

The seal portion 17 is attached to the outer ring 11 by engaging the outer edge portion 17b with the sealing outer ring groove 11b of the outer ring 11. At this time, the core metal 16 is disposed on a ball 13 side. The auxiliary lip portion 17d has an inner edge disposed at a position slightly separated from an inner periphery of the inner ring 12 and does not slide relative to the inner ring 12, and thus the auxiliary lip portion 17d does not wear. The auxiliary lip portion 17d has a function of returning grease traveling along an inner side of the core metal 16 from the outer ring 11 toward the inner ring 12 to an inner ring raceway groove 12a side, and a function of restricting the grease from traveling toward the sealing inner ring groove 12b by a so-called labyrinth structure.

In FIG. 2, the sealing inner ring groove 12b includes a bottom surface 12c that is a cylindrical surface, an inner side surface 12d that is a tapered surface, and an outer side surface 12e that is a tapered surface facing the inner side surface 12d in the axial direction. The inner side surface 12d and the outer side surface 12e are inclined relative to the plane orthogonal to the axis of the seal-equipped ball bearing 10. More specifically, in the cross section of FIG. 2, the inner side surface 12d extends from the bottom surface 12c to be inclined axially inward, and has a tapered shape whose diameter increases axially inward from the bottom surface 12c. The outer side surface 12e extends from the bottom surface 12c to be inclined axially outward, and has a tapered shape whose diameter increases axially outward from the bottom surface 12c.

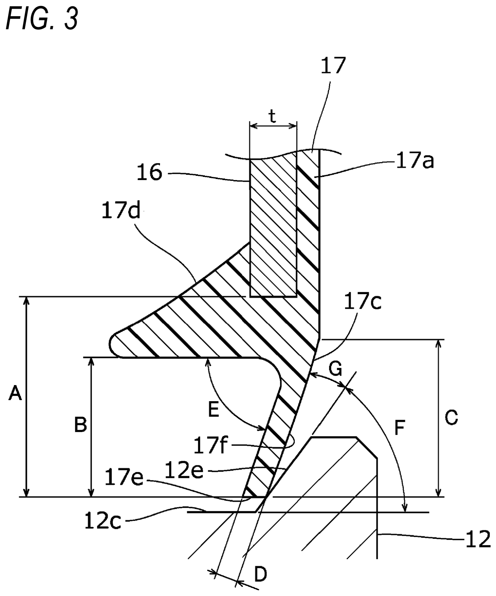

The lip portion 17c has a tapered annular plate shape having a substantially uniform plate thickness on an inner diameter side relative to an intersecting portion with the auxiliary lip portion 17d, and a part of the outer surface 17f thereof is elastically deformed and abuts against the outer side surface 12e, thereby functioning as a contact seal. In FIGS. 2 and 3, the lip portion 17c is shown in a state of being not elastically deformed.

In FIG. 3, dimension lines and reference numerals indicating dimensions of respective portions are added to a cross section of the lip portion. In FIG. 3, when a plate thickness of the core metal 16 is t (mm), a radial distance from a radially inner edge of the core metal 16 to a radially inner edge of the lip portion 17c (intersecting portion between the outer surface 17f and the end surface 17e) is A (mm), a radial distance from an inner periphery of the auxiliary lip portion 17d to a radially inner edge of the lip portion 17c is B (mm), a radial distance of the sealing inner ring groove 12b from a boundary (bending point) between the outer portion 17a and the lip portion 17c to an inner edge of the lip portion 17c is C (mm), and a plate thickness of the lip portion 17c is D (mm), following relationships are established.

$$t > D \ (1)$$

$$A > C > B \ (2)$$

Here, when Expression (1) is established, it is possible to impart flexibility to the lip portion 17c and enhance a sealing effect while ensuring rigidity of the seal member 15. When Expression (2) is established, rigidity of a base of the lip portion 17c can be increased, and an inner edge side (side close to the end surface 17e) of the lip portion 17c can be relatively easy to bend.

In the cross section of FIG. 3, when an angle defined by the inner periphery of the auxiliary lip portion 17d and an axially inner side surface of the lip portion 17c is E (°), an angle defined by the outer surface 17f of the lip portion 17c and the outer side surface 12e of the sealing inner ring groove 12b is G (°), and an angle defined by the outer side surface 12e and the bottom surface 12c is F (°), following expressions are established. However, although the lip portion 17c is elastically deformed and bent when the outer surface 17f of the lip portion 17c comes into contact with the outer side surface 12e by assembly, the angles G, E are angles defined by the lip portion 17c, the outer side surface 12e, and the auxiliary lip portion 17d in a free state (state before assembly), which can be obtained from, for example, design values of the seal-equipped ball bearing 10.

$$E > F \ (3)$$

$$E > G > 0 \ (4)$$

When Expression (3) is established, the lip portion 17c is inclined such that the inner edge of the lip portion 17c is displaced axially inward relative to the outer portion 17a, and thus the outer surface 17f can abut against the outer side surface 12e over a prescribed range from the intersecting portion of the end surface 17e and the lip portion 17c, and accordingly a surface pressure distribution to be described later can be generated. When Expression (4) is established, the outer surface 17f including at least the intersecting portion of the end surface 17e and the lip portion 17c can abut against the outer side surface 12e.

Here, in the cross section of FIG. 2, when a normal line of the outer side surface 12e is N, an orthogonal coordinate system is set in which a direction along the normal line N is a y direction, a direction orthogonal to the y direction is an x direction, the y direction is a y axis, and the x direction is an x axis. A point of the lip portion 17c which abuts against the outer side surface 12e and is closest to the bottom surface 12c is defined as an origin 0 of the orthogonal coordinate system.

(Comparative Examples)

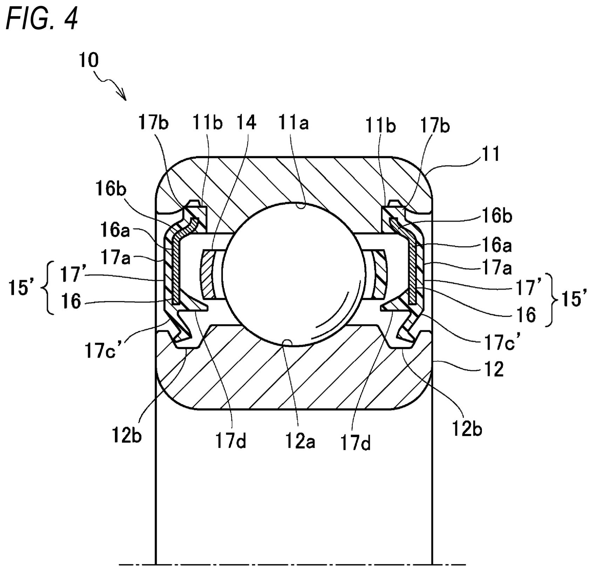

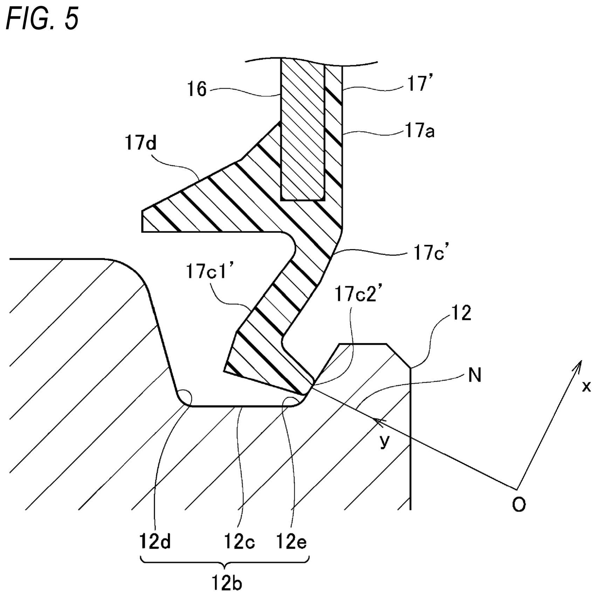

Next, a comparative example will be described. FIG. 4 is a cross-sectional view of the seal-equipped ball bearing 10 according to the comparative example. FIG. 5 is an enlarged view showing a vicinity of a lip portion in the seal-equipped ball bearing 10 according to the comparative example.

The seal-equipped ball bearing 10 according to the comparative example includes the outer ring 11 having the outer ring raceway groove 11a on the inner diameter surface, the inner ring 12 having the inner ring raceway groove 12a on the outer diameter surface, the plurality of balls 13 rollably arranged between the outer ring raceway groove 11a and the inner ring raceway groove 12a, the cage 14 formed of resin and holding the balls 13 at prescribed intervals in the circumferential direction, and a pair of seal members 15' fixed to two sides of the inner diameter surface of the outer ring 11 in the axial direction and sealing the inside of the bearing. Configurations other than the seal members 15' are the same as those of the seal-equipped ball bearing 10 according to the present embodiment, and thus redundant description will be omitted.

The seal member 15' includes the core metal 16 formed in a substantially annular shape by a metal plate such as a steel plate, and a seal portion 17' fixed to the core metal 16 and formed of an elastic material such as rubber. Configurations other than the seal portion 17' are the same as those of the seal member 15 according to the present embodiment, and configurations of the seal portion 17' other than a lip portion 17c' are the same as those of the lip portion 17c according to the present embodiment, and thus redundant description will be omitted.

The lip portion 17c' includes a lip portion body 17c1' continuous with the outer portion 17a and extending toward the sealing inner ring groove 12b, and a lip portion tip end portion 17c2' continuous with an inner edge of the lip portion body 17c1' and extending in a cantilevered manner (in a tubular shape) in the axial direction in the cross section of FIG. 5.

The lip portion tip end portion 17c2' has a radial thickness decreasing toward a tip end side, and accordingly a cross-sectional shape of the lip portion tip end portion 17c2' has an R-shaped (arc-shaped) contour at a tip end. The lip portion body 17c1' has a larger plate thickness than the core metal 16, and accordingly rigidity of the lip portion body 17c1' can be ensured, and the lip portion tip end portion 17c2' is relatively easy to deform.

In an assembled state, the tip end of the lip portion tip end portion 17c2' abuts against the outer side surface 12e of the sealing inner ring groove 12b to exhibit a sealing function. At this time, as shown in FIG. 5, the tip end of the lip portion tip end portion 17c2' abuts against the inclined outer side surface 12e and is elastically deformed to be pushed out toward the bottom surface 12c.

Here, in the cross section of FIG. 5, when the normal line of the outer side surface 12e is N, an orthogonal coordinate system is set in which the direction along the normal line N is the y direction, the direction orthogonal to the y direction is the x direction, the y direction is the y axis, and the x direction is the x axis. A point of the lip portion tip end portion 17c2' which abuts against the outer side surface 12e and is closest to the bottom surface 12c is defined as the origin 0 of the orthogonal coordinate system.

(Surface Pressure Distribution)

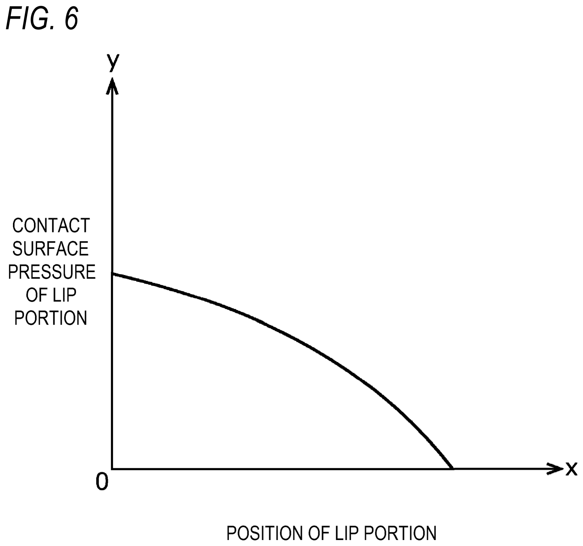

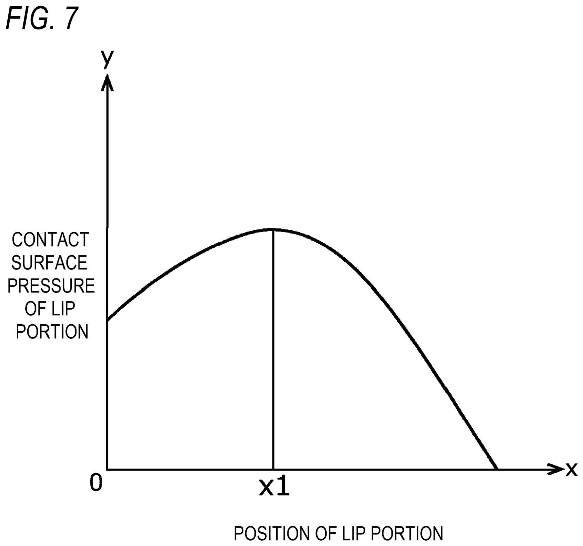

FIG. 6 shows a surface pressure distribution of the seal portion 17 of the seal-equipped ball bearing 10 according to the present embodiment. FIG. 7 shows a surface pressure distribution of the seal portion 17' of the seal-equipped ball bearing 10 according to the comparative example. In an orthogonal coordinate system according to the corresponding definitions described above, the y axis is surface pressure received by the seal portions 17, 17' from the outer side surface 12e, and the x axis is a position of the seal portions 17, 17' that receive the surface pressure. Therefore, a region where the surface pressure is 0 or more is a contact range where the lip portion 17c or the lip portion tip end portion 17c2' is in contact with the outer side surface 12e.

First, in the seal-equipped ball bearing 10 according to the comparative example, the tip end of the lip portion tip end portion 17c2' has an R shape. Accordingly, when the lip portion tip end portion 17c2' abuts against the outer side surface 12e, as shown in FIG. 7, the surface pressure is highest at a central portion (position of x1) of the contact range where the lip portion tip end portion 17c2' is in contact with the outer side surface 12e from the Hertz contact theory.

When the surface pressure at the central portion of the contact range is highest, the surface pressure in a vicinity of the origin 0 is relatively low. For this reason, grease is likely to enter between the lip portion tip end portion 17c2' and the outer side surface 12e from an origin 0 side (side close to the bottom surface 12c), which may cause grease leakage. When rigidity of the lip portion 17c' is increased to increase an absolute value of the surface pressure between the lip portion tip end portion 17c2' and the outer side surface 12e to prevent this, a drag torque may increase, the lip portion tip end portion 17c2' may wear, and the like.

In contrast, in the seal-equipped ball bearing 10 according to the present embodiment, the lip portion 17c is easy to bend by satisfying Expression (1), and by satisfying Expression (3), the outer surface 17f of the lip portion 17c can abut against the outer side surface 12e from the intersecting portion of the end surface 17e and the lip portion 17c. For this reason, as shown in FIG. 6, the surface pressure is highest at a position (origin 0) where the intersecting portion of the lip portion 17c and the end surface 17e is in contact with the outer side surface 12e.

According to the present embodiment, since the surface pressure in the vicinity of the origin 0 is the highest and so-called edge contact occurs, it is possible to restrict grease from entering between the lip portion 17c and the outer side surface 12e from the origin 0 side (side close to the bottom surface 12c). For this reason, grease leakage can be effectively restricted without increasing the absolute value of the surface pressure of the lip portion 17c, and thus an increase in the drag torque, wear of the lip portion 17c, and the like can be restricted.

(Disk Contamination Test and Grease Leakage Test)

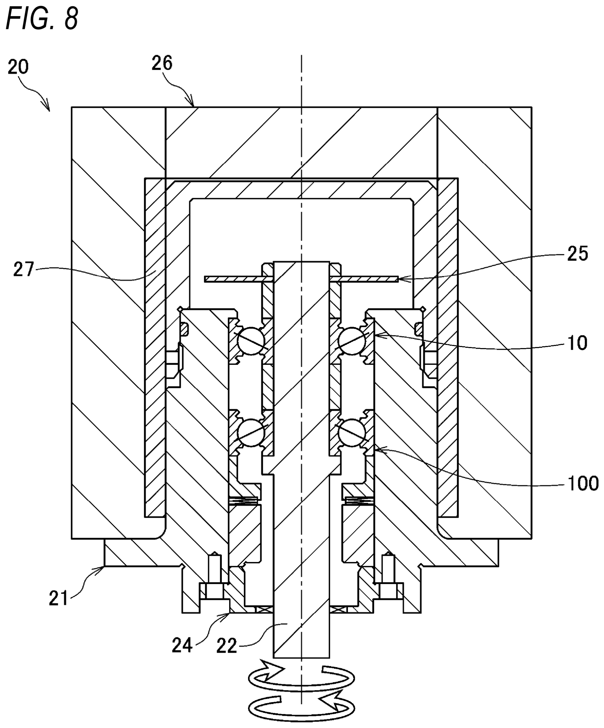

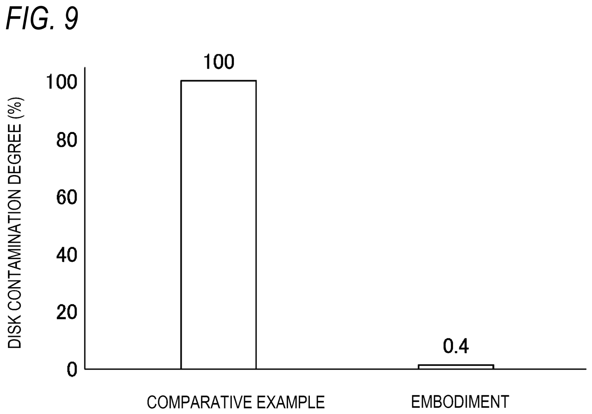

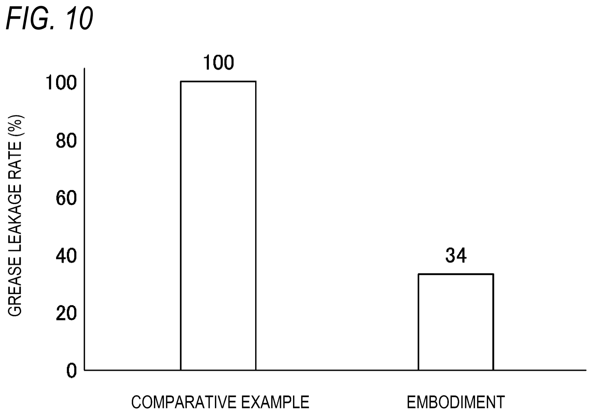

A contamination degree of a disk simulating an encoder of a servomotor and a leakage rate of grease from a bearing were tested using a test machine shown in FIG. 8. FIG. 8 is a cross-sectional view of the test machine reproducing an inside of the servomotor. FIG. 9 shows test results regarding a disk contamination degree of the embodiment and the comparative example. FIG. 10 shows test results regarding a grease leakage rate of the embodiment and the comparative example.

As illustrated in FIG. 8, a test machine 20, which imitates an encoder device for a servomotor, includes a housing 21, a rotation shaft 22 disposed inside the housing 21, a pair of ball bearings 10, 110 that rotatably support the rotation shaft 22 relative to the housing 21, and a disk-shaped encoder simulating disk 25 that is attached to one end portion of the rotation shaft 22 in an axial direction and rotates together with the rotation shaft 22. Of the pair of seal-equipped ball bearings 10, 110, the ball bearing closer to the encoder simulating disk 25 is the seal-equipped ball bearing 10 according to the above-described embodiment (see FIGS. 1 to 3) or the comparative example (see FIGS. 4 and 5), and the ball bearing closer to a seal member 24 is a general ball bearing for support. In FIG. 8, the seal-equipped ball bearing 10 is schematically shown, and neither the cage 14 nor the seal member 15 is shown.

In the test machine 20, an inside of the housing 21 is a sealing structure by the seal member 24 provided at the other end portion of the housing 21 in the axial direction. The pair of seal-equipped ball bearings 10, 110 are in a front combination. The housing 21 has an outer peripheral portion thereof covered with a tubular heater 27. Further, the housing 21 and the heater 27 have outer peripheral portions and one axial end portions thereof covered with a heat insulating material 26. Heating by the heater 27 is possible according to test conditions. The rotation shaft 22 is driven by a motor which is not shown, and a rotation speed and a rotation direction thereof can be appropriately changed.

As the seal-equipped ball bearing 10 of the test machine 20, the seal-equipped ball bearing 10 according to the above-described embodiment (see FIGS. 1 to 3) or the comparative example (see FIGS. 4 and 5) was assembled and tested. When the test machine 20 is operated, base oil inside the seal-equipped ball bearing 10 leaks out, and the encoder simulating disk 25 is contaminated. Evaluation of a contamination degree of the encoder simulating disk 25 (see FIG. 9) was performed by imaging the encoder simulating disk 25 with a camera or the like and calculating an area of a contaminated part relative to an area of the entire disk. A grease leakage rate was evaluated (see FIG. 10) by calculating the grease leakage rate from a weight difference of the seal-equipped ball bearing 10 before and after the test. The test results shown in FIGS. 9 and 10 show average values of four tests.

Referring to FIG. 9 showing the results of the disk contamination test, it can be seen that when the contamination degree of the encoder simulating disk 25 in a case of using the seal-equipped ball bearing 10 according to the comparative example is 100%, the contamination degree of the encoder simulating disk 25 in the case of using the seal-equipped ball bearing 10 according to the embodiment is reduced to 0.4%. Referring to FIG. 10 showing the test results of the grease leakage rate, it can be seen that when the leakage rate of grease in the case of using the seal-equipped ball bearing 10 according to the comparative example is 100%, the leakage rate of grease in the case of using the seal-equipped ball bearing 10 according to the embodiment is reduced to 34%. In this manner, according to the seal-equipped ball bearing 10 in the present embodiment, grease leakage can be effectively restricted.

The present invention is not limited to the above-described embodiments. Any component in the above-described embodiments can be modified within the scope of the present invention. In addition, any component in the above-described embodiments can be added or omitted.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, components described in the above embodiments may be combined in any manner without departing from the spirit of the invention.

The present application is based on a Japanese patent application filed on April 28, 2023 (JP2023-074809A) and a Japanese patent application filed on September 29, 2023 (JP2023-170321A), and contents thereof are incorporated herein by reference.

REFERENCE SIGNS LIST

10 seal-equipped ball bearing
11 outer ring
12 inner ring
12b sealing inner ring groove
12c bottom surface
12e outer side surface
13 ball
15 seal member
16 core metal
17 seal portion
17a outer portion
17c lip portion
17d auxiliary lip portion
20 test machine
21 housing
22 rotation shaft
24 seal member
25 encoder simulating disk
26 heat insulating material
27 heater

Claims

1. A seal-equipped ball bearing comprising:

an outer ring having an outer ring raceway groove in an inner diameter surface;
an inner ring having an inner ring raceway groove in an outer diameter surface;
a plurality of balls rollably arranged between the inner ring raceway groove and the outer ring raceway groove; and
a seal member attached to the outer ring and extending toward the inner ring on each of two sides of the balls in an axial direction, wherein the inner ring has a sealing inner ring groove having a bottom surface and an outer side surface intersecting the bottom surface,

the seal member includes a core metal and a seal portion,

the seal portion has an outer portion in close contact with the core metal and a plate-shaped lip portion extending radially inward from the outer portion,

the lip portion has an outer surface and an end surface intersecting the outer surface, and

the outer surface including an intersecting portion with the end surface abuts against the outer side surface.

2. The seal-equipped ball bearing according to claim 1, wherein

surface pressure generated between the outer surface of the lip portion and the outer side surface of the sealing inner ring groove is maximum at the intersecting portion with the end surface.

3. The seal-equipped ball bearing according to claim 2, wherein

the intersecting portion of the outer side surface and the end surface in the lip portion has an edge shape.

4. The seal-equipped ball bearing according to claim 1, wherein

the outer side surface of the sealing inner ring groove has a tapered shape whose diameter increases axially outward from the bottom surface, and

the outer surface of the lip portion has a tapered shape whose diameter decreases axially inward from an outer surface of the outer portion.

5. The seal-equipped ball bearing according to any one of claims 1 to 4, wherein

the lip portion has a substantially uniform plate thickness.

*FIG. 1*

FIG. 2

FIG. 3

FIG. 4

FIG. 5

*FIG. 6*

CONTACT
SURFACE
PRESSURE
OF LIP
PORTION

POSITION OF LIP PORTION

FIG. 7

## FIG. 8

## FIG. 9

## FIG. 10

## INTERNATIONAL SEARCH REPORT

| International application No. |
|---|
| **PCT/JP2024/001113** |

**A. CLASSIFICATION OF SUBJECT MATTER**

*F16C 33/78*(2006.01)i; *F16C 19/06*(2006.01)i; *F16C 19/16*(2006.01)i; *F16C 33/58*(2006.01)i; *F16J 15/3204*(2016.01)i; *F16J 15/3232*(2016.01)i

FI: F16C33/78 D; F16C19/06; F16C33/58; F16J15/3232 201; F16C19/16; F16J15/3204 201

According to International Patent Classification (IPC) or to both national classification and IPC

**B. FIELDS SEARCHED**

Minimum documentation searched (classification system followed by classification symbols)

F16C33/78; F16C19/06; F16C19/16; F16C33/58; F16J15/3204; F16J15/3232

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No. 099836/1974 (Laid-open No. 26940/1976) (ASAHI SEIKO CO., LTD.) 27 February 1976 (1976-02-27), p. 2, line 14 to p. 3, line 16, fig. 3 | 1-5 |
| X | JP 2010-48328 A (NTN CORPORATION) 04 March 2010 (2010-03-04) paragraphs [0020]-[0024], [0084], [0085], fig. 1-3, 50 | 1-5 |

☐ Further documents are listed in the continuation of Box C.　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 January 2024** | **20 February 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/001113**

| Patent document cited in search report | | | Publication date (day/month/year) | Patent family member(s) | Publication date (day/month/year) |
|---|---|---|---|---|---|
| JP | 51-26940 | U1 | 27 February 1976 | (Family: none) | |
| JP | 2010-48328 | A | 04 March 2010 | US 2011/0002568 A1 paragraphs [0360]-[0364], fig. 73 WO 2009/116295 A1 EP 2267324 A1 CN 101978181 A | |

Form PCT/ISA/210 (patent family annex) (July 2022)

**EP 4 703 599 A1**

**Patent documents cited in the description**

- JP 2022072083 A
- JP 2023074809 A
- JP 2023170321 A